# EUROPÄISCHE PATENTSCHRIFT

(11) **EP 2 275 253 B1**
(45) Veröffentlichungstag und Bekanntmachung des Hinweises auf die Patenterteilung: **10.10.2018**
(21) Anmeldenummer: 10169618.5
(22) Anmeldetag: 15.07.2010
(51) Int. Cl.: B32B 5/18, B32B 5/22, B32B 5/24, B60R 13/08

(54) **SCHALLDÄMPFELEMENT**
ACOUSTIC DAMPING ELEMENT
ELÉMENT D'AMORTISSEMENT DE BRUIT

(30) Priorität: 16.07.2009 DE 202009009786 U; 13.08.2009 DE 202009010969 U
(43) Veröffentlichungstag der Anmeldung: 19.01.2011
(73) Patentinhaber: Odenwald Chemie GmbH, 69250 Schönau (DE)
(72) Erfinder: Feist, Michael, 69493, Hirschberg (DE); Schwammberger, Torsten, 74862 Binau (DE)
(74) Vertreter: Müller Schupfner & Partner Patent- und Rechtsanwaltspartnerschaft mbB

(56) Entgegenhaltungen:
- EP-B1- 1 558 191
- DE-A1- 19 821 532
- DE-A1-102005 006 234

## Beschreibung

Die vorliegende Erfindung betrifft ein Schalldämpfelement nach dem Oberbegriff des Anspruchs 1. Solche Schalldämpfelemente eignen sich zur Schallabsorption, beispielsweise als Akustik-Absorber im Automobilbereich. Insbesondere kommen solche Schalldämpfelemente dann zum Einsatz, wenn aufgrund der geringen Bauhöhe oder schwieriger geometrischer Strukturen andere Schallabsorber, wie beispielsweise Kammerabsorber, nicht anwendbar sind.

Es ist bekannt, Polyurethan-Weichschaumstoffe zur Bauteil-Entkopplung und zur Schall- und Schwingungsdämpfung zu verwenden. Aufgrund ihrer offenzelligen Struktur können derartige Polyurethan-Weichschaumstoffe neben der Absorption von Schall auch zum Abdichten and beispielsweise als Distanzstück verwendet werden. Die guten Toleranz ausgleichenden Eigenschaften erlauben die Anwendung als dauerelastischer Puffer oder Dichtstreifen an Bauteil-Schnittstellen; beispielsweise bei Luft- und Kühlsystemen wie in Klimaanlagen eignen sich derartige Schaumstoffsysteme, um lästigen Luftschall zu absorbieren. Aber auch beim Unterbodenschutz von Kraftfahrzeugen können diese Schalldämpfelemente dünnlagig aufgebracht werden, um den Innenraum eines Kraftfahrzeugs vor Roll- und Fahrgeräuschen und/oder Motor- und Getriebegeräuschen zu schützen.

Herkömmliche getränkte Polyurethan-Weichschaumstoffe haben gegenüber anderen Schallabsorptionsmaterialien wie ungetränkte PUR-Schäume den Vorteil, dass sie witterungsbeständig und abriebfest sind. PET-Vliese sind zwar witterungsbeständig aber nicht abriebfest. Der Nachteil dieser Schalldämpfelemente aus Schaum liegt aber in deren beschränkten akustischen Leistung, d.h. die Schallabsorption ist in der Regel schlechter als bei Kammerabsorbern, Lochabsorbern oder auch Vliesstoffen.

Ein Schalldämpfelement aus einer offenzelligen Struktur ist aus der DE 10 2005 006 234 B4 bekannt. Eine aus duroplastischem Schaumstoff bestehende Lage wird mittels einer vollflächigen Bindeschicht mit einem Abdeckvlies verbunden, wobei die Bindeschicht u.a. eine thermoplastische Komponente und eine duroplastische Komponente aufweist, wodurch eine gewisse Steifigkeit erzielt wird. Ein solches Material ist aber weniger flexibel und lässt sich daher, insbesondere im KfZ Bereich, nur an entsprechend geeigneten Stellen - wie der Motorraumverkleidung - anbringen. Im übrigen ist eine solche dreilagige Struktur, die z.T aus unterschiedlichen Bestandteilen besteht, entsprechend kompliziert in der Herstellung.

Die US 2003/0134553 beschreibt eine luftdurchlässige, schallabsorbierende, mehrlagige Struktur aus einer ersten Lage aus getränktem Polyester oder einem offenzelligen Schaum, die mit einer Lage aus beispielsweise Polyethylen verbunden ist.

Die DE 198 21 532 A1 offenbart eine Wärme- und schalldämmende Verkleidung mit einer duroplastischen Schaumschicht bzw. einer akustisch isolierenden Schicht, dadurch gekennzeichnet, dass eine Deckschicht aus Vlies auf mindestens einer Seite des Schaums aufgebracht ist, wobei die akustisch isolierende Schicht ein Raumgewicht von RG 30 - 250 kg/m³ hat.

Die EP 1 558 191 B1 offenbart Masse-Absorber-Systeme bzw. Schallisolierungen mit einer Schaumstoffschicht, dadurch gekennzeichnet, dass eine ein- oder zweiseitige Deckschicht aus Vlies aufgebracht wird, wobei der Schaumstoff ein Raumgewicht von RG 35 - 190 kg/m³ aufweist.

Es ist die Aufgabe der vorliegenden Erfindung, die akustischen Eigenschaften von Schaumabsorbern zu verbessern, die Herstellung solcher Absorber zu vereinfachen und deren Einsatzzwecke zu erweitern.

Diese Aufgabe wird durch die kennzeichnenden Merkmale des Anspruchs 1 gelöst. Vorteilhafte Ausgestaltungen der vorliegenden Erfindung sind in den Unteransprüchen gekennzeichnet und beansprucht.

Die Erfindung zeichnet sich dadurch aus, dass auf einer herkömmlichen Schicht aus Schaum eine dünne Membran aus Vlies aufgebracht wird, wobei diese Membran an einer oder an beiden Seiten des Schaums aufgebracht werden kann. Die Schichtdicke dieser Membran ist dabei wesentlich geringer als die Schichtdicke des Schaums, in der Regel weniger als 10 % der Schichtdicke des Schaums, bevorzugt aber weniger als 5 % der Schichtdicke des Schaums und besonders bevorzugt weniger als 1 %.

Als Schaum kann ein herkömmlicher Polyurethan-Weichschaum, bevorzugt ein Polyetherurethan-Weichschaum, verwendet werden, der ggf. mit Polyacrylat getränkt ist. Bevorzugt wird ein schwerer Schaum mit einem Raumgewicht von60 kg/m³ bis 150 kg/m³. Als Vlies eignet sich ein Polyester, insbesondere ein Polyesterfaservlies. Das Vlies hat dabei mit Vorteil ein Flächengewicht von weniger als 100 g/m², insbesondere weniger als 50 g/m².

Die Kombination aus im Verhältnis dicker Schaumschicht und dünner Membran aus Vlies hat überraschende Wirkung gezeigt. So ergaben Untersuchungen, dass die dünne Membran aus Vlies offenbar mit dem Schaum den Schall, besonders bei Frequenzen oberhalb von etwa 1500 Hz, erheblich besser absorbiert als eine gleich dicke Schicht aus Schaum ohne Membran. Diese Wirkung ist sogar noch besser, wenn das Schalldämpfelement nicht vollflächig auf den Untergrund wie beispielsweise einem Metallbauteil aufgeklebt wird, sondern nur an einigen wenigen Punkten fixiert wird, so dass es praktisch frei schwebend zur Anwendung kommt.

Die dünne Membran aus Vlies wird auf den Schaum bevorzugt mittels Kaschieren, insbesondere mittels Trockenkaschieren aufgebracht. Natürlich kann das Vlies auch durch Thermokaschieren aufgebracht werden, sofern sich die verwendeten Plastikmaterialien thermisch verbinden lassen.

Nach einer bevorzugten Ausführungsform der vorliegenden Erfindung ist die dünne Membran aus Vlies zusätzlich mit kleinen Löchern versehen, wobei die Löcher einen Durchmesser aufweisen, der kleiner ist als die doppelte Schichtdicke der Membran, insbesondere kleiner als die einfache Schichtdicke der Membran. Die Löcher selbst haben dabei einen Abstand von wenigstens der doppelten, bevorzugt fünffachen Schichtdicke der Membran, besonders bevorzugt die 10 - 20 fache Schichtdicke, d.h. die Löcher sind im Verhältnis sehr klein, aber weit voneinander beabstandet. Die dünne Membran hat dabei eine bevorzugte Dicke von etwa 10 µm bis 500 µm, besonders bevorzugt zwischen 10 µm und etwa 100 µm.

Erfindungsgemäß wird die Membran aus z.B. Vlies mit Klebestreifen und/oder Klebepunkten, d.h. einem in Streifen oder an bestimmten Punkten aufgebrachten Kleber befestigt. Es hat sich in Tests gezeigt, dass die Schalldämpfeigenschaften eines solchen Aufbringens besser sind als bei vollflächiger Verklebung. Außerdem ist eine solche Anbringung kostengünstiger.

Der Schaum ist insbesondere ein offenporiger Polyetherurethan-Weichschaum mit Schichtdicken von 1mm bis 50mm, bevorzugt 5,5mm bis 30mm oder 1mm bis etwa 10mm. Der Schaum ist nach einer besonderen Ausführungsform der vorliegenden Erfindung imprägniert, insbesondere mit einem Polyacrylat imprägniert.

Das Schalldämpfelement der vorliegenden Erfindung ist multifunktional einsetzbar, da es nicht selbsttragend sondern flexibel und anschmiegsam ist. Aufgrund seiner Masse kann es bevorzugt als Luftschallabsorber mit Schwingungsreduktion, der im KFZ- oder Bahn-Bereich besonders für Innenraumanwendungen geeignet ist. Aufgrund seiner Tränkung hat das erfindungsgemäße Schalldämpfelement eine vorteilhafte Viscoelastizität und kann - aufgrund seiner einfachen Herstellung - innerhalb eines Toleranzbereichs mit gleichbleibender Stärke hergestellt werden, da es nicht verprägt wird. Das Raumgewicht ist im wesentlichen über die gesamte Baulänge konstant, ebenso wie die räumliche Dimensionierung.

Eine bevorzugte Ausführungsform der vorliegenden Erfindung wird anhand der beiliegenden Figuren näher erläutert. Dabei zeigen:
- Figur 1: einen schematischen Querschnitt durch das erfindungsgemäße Schalldämpfelement, und
- Figur 2: den Schallabsorptionskoeffizienten der Schaumschicht 3 im Vergleich zum Schalldämpfelement 1.

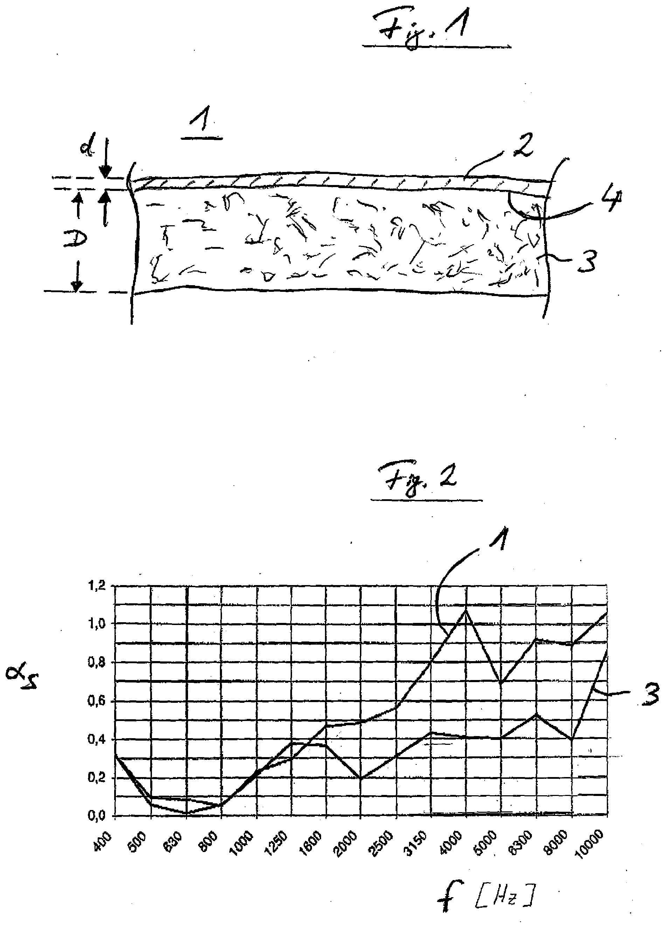

Figur 1 zeigt eine Schicht aus Schaum 3, auf die eine dünne Membran 2 mittels Kaschieren aufgebracht ist. Die Schaumschicht 3 und die dünne Membran 2 bilden das Schalldämpfelement 1. Die Membran 2 kann auf einer oder beiden Seiten der Schicht aus Schaum 3 aufgebracht sein. Bevorzugt ist die dünne Membran 2 mittels eines streifenförmigen Klebers 4 auf dem Schaum 3 aufkaschiert. Als Schaum 3 eignet sich insbesondere ein dauerelastischer, feinporiger, imprägnierter Polyether-, insbesondere Polyetherurethan-Weichschaum, der mit einem weichmacherfreien, modifizierten Polyacrylat imprägniert ist. Dieser Schaum ist elektrisch nicht leitend und verträgt sich mit allen metallischen und nichtmetallischen Werkstoffen. Rohdichten von 60 kg/m³ bis 200 kg/m³, bevorzugt 80 kg/m³ bis 150 kg/m³ sind bevorzugt. Im Rahmen der vorliegenden Erfindung ist ein Schaum mit einer Rohdichte bzw. einem Raumgewicht von 60 kg/m³ bis 150 kg/m³ vorgesehen. Der schwere Schaum hat bevorzugt eine Zugfestigkeit von mehr als 90 kPa (ISO 1798) und eine Bruchdehnung von mehr als 130 % (ISO 1798). Die Schäume lassen sich bei Temperaturen von -40°C bis +120°C und kurzzeitig sogar bis zu 150°C einsetzen. Die Schäume sind alterungs-, witterungs- und hydrolysebeständig und unbegrenzt lagerfähig. In der Regel weisen die erfindungsgemäßen Schäume eine Selbstkleberbeschichtung auf, die zur Befestigung der dünnen Membran dient.

### Beispiel:

Ein mit Rohacrylat getränkter Polyetherurethan-Weichschaum, mit einer Dicke von 5,5 mm, wurde im Hallraum mit einer Größe von etwa 28 m³ im Vergleich zur gleichen Schaumschicht, die mit einer dünnen Membran 2 aus Vlies versehen ist, getestet. Die technischen Daten der dünnen Membran waren dabei folgende:

| | |
|---|---|
| Zusammensetzung: | 100 % PES |
| Verfestigung: | thermische |
| Gewicht: | 30 g/m² |
| Dicke: | 45 µm |
| Höchstzugkraft längs: | 100 N/5 cm |
| HZ-Dehnung längs: | 14 % |
| Luftdurchlässigkeit: | 600 l/m²/s, bei 196 Pa, 20 cm² |

Als Probenfläche wurde eine Größe von 1,2 m² verwendet.

Die dünne Membran 2 aus Vlies wurde auf den Polyetherurethan-Weichschaum mit einem Streifenkleber aufgebracht, d.h. es wurden Klebestreifen eines Transferklebers von ca. 20mm Breite und 20mm Abstand zwischen den Klebestreifen aufgebracht. Es hat sich in Tests gezeigt, dass die Schalldämpfeigenschaften eines solchen Aufbringens besser sind als bei vollflächiger Verklebung.

Die Ergebnisse der Prüfung sind in Figur 2 dargestellt. Auf der Querachse ist die Frequenz f in Hertz und auf der Hochachse der Schallabsorptionskoeffizient α_{S} aufgetragen. Wie aus Figur 2 ersichtlich, ist der Schallabsorptionskoeffizient α_{S} des erfindungsgemäßen Schalldämpfelements 1 ab etwa 1500 Hz größer als der Schallabsorptionskoeffizient α_{S} der reinen Schicht aus Schaum 3, obwohl dieser lediglich die sehr dünne Membran von lediglich 45 µm aufkaschiert wurde.

Offensichtlich bewirkt die dünne Vliesschicht eine erheblich bessere Schallabsorption ab einem gewissen Frequenzbereich, wobei durch Änderung der Schichtdicke des Vlies bzw. der Probengröße auch andere Frequenzbereiche durch die vorliegende Erfindung zuverlässig besser absorbiert werden können als ohne der aufgebrachten dünnen Membran 2. Dabei ist die Schichtdicke d der Membran in der Regel geringer als 5 % der Schichtdicke des Schaums D, insbesondere kleiner als 1 %. Im vorliegenden Beispiel betrug die Schichtdicke d der Membran etwa 0,8 % der Schichtdicke des Schaums D.

## Patentansprüche

1. Schalldämpfelement (1) mit einer Schicht aus Schaum (3),
wobei eine dünne Membran (2) aus Vlies auf mindestens einer Seite des Schaums (3) aufgebracht wird,
wobei der Schaum (3) ein Raumgewicht von 60 kg/m³ bis 150 kg/m³ aufweist,
**dadurch gekennzeichnet, dass** die dünne Membran (2) aus Vlies mittels eines streifenförmigen oder punktförmigen Klebers auf den Schaum (3) aufgebracht wird.

2. Schalldämpfelement (1) nach Anspruch 1,
**dadurch gekennzeichnet,**
**dass** die Schichtdicke der Membran (d) weniger als 5% der Schichtdicke des Schaums (D), insbesondere weniger als 1% beträgt.

3. Schalldämpfelement (1) nach Anspruch 1 oder 2,
**dadurch gekennzeichnet,**
**dass** der Schaum (3) ein Polyurethan-, insbesondere eine Polyetherurethan-Weichschaum ist.

4. Schalldämpfelement nach einem der vorhergehenden Ansprüche,
**dadurch gekennzeichnet,**
**dass** das Vlies ein Polyesther-, insbesondere eine Polyestherfaservlies ist.

5. Schalldämpfelement nach einem der vorhergehenden Ansprüche,
**dadurch gekennzeichnet,**
**dass** das Vlies ein Flächengewicht von weniger als 100 g/m², insbesondere weniger als 50 g/m² hat.

6. Schalldämpfelement nach einem der vorhergehenden Ansprüche,
**dadurch gekennzeichnet,**
**dass** die dünne Membran (2) aus Vlies auf den Schaum (3) mittels Kaschieren, insbesondere mittels Trockenkaschieren aufgebracht wird.

7. Schalldämpfelement nach einem der vorhergehenden Ansprüche,
**dadurch gekennzeichnet,**
**dass** die dünne Membran (2) aus Vlies zusätzlich mit kleinen Löchern versehen ist, wobei die Löcher einen Durchmesser aufweisen, der kleiner ist als die doppelte Schichtdicke (d) der Membran, insbesondere kleiner ist als die einfache Schichtdicke (d) der Membran.

8. Schalldämpfelement nach einem der vorhergehenden Ansprüche,
**dadurch gekennzeichnet,**
**dass** die dünne Membran (2) aus Vlies zwischen 10 µm und 500 µm, bevorzugt zwischen 10 µm und 100 µm dick ist.

9. Schalldämpfelement nach einem der vorhergehenden Ansprüche,
**dadurch gekennzeichnet,**
**dass** der Schaum (3) ein offenporiger Polyetherurethan-Weichschaum mit Schichtdicken (D) von 1 mm bis 50mm, bevorzugt 1mm bis 10 mm ist.

10. Schalldämpfelement nach einem der vorhergehenden Ansprüche,
**dadurch gekennzeichnet,**
**dass** der Schaum (3) imprägniert, insbesondere mit einem Polyacrylat imprägniert ist.

11. Schall dämmendes Bauteil,
**dadurch gekennzeichnet,**
**dass** das Schalldämpfelement nach einem der vorhergehenden Ansprüche nur an einigen wenigen Punkten des schall dämmenden Bauteils fixiert wird.

## Claims

1. Acoustic damping element (1) having a layer of foam (3),
where a thin membrane (2) of nonwoven web is applied to at least one side of the foam (3),
the foam (3) having a density of 60 kg/m³ to 150 kg/m³,
**characterized in that** the thin membrane (2) of nonwoven web is applied to the foam (3) by means of an adhesive in stripe or dot form.

2. Acoustic damping element (1) according to Claim 1, **characterized**
**in that** the layer thickness of the membrane (d) is less than 5% of the layer thickness of the foam (D), more particularly less than 1%.

3. Acoustic damping element (1) according to Claim 1 or 2,
**characterized**
**in that** the foam (3) is a flexible polyurethane foam, more particularly a flexible polyether urethane foam.

4. Acoustic damping element according to any of the preceding claims,
**characterized**
**in that** the nonwoven web is a polyester web, more particularly a polyester fibre web.

5. Acoustic damping element according to any of the preceding claims,
**characterized**
**in that** the nonwoven web has a basis weight of less than 100 g/m², more particularly less than 50 g/m².

6. Acoustic damping element according to any of the preceding claims,
**characterized**
**in that** the thin membrane (2) of nonwoven web is applied to the foam (3) by means of laminating, more particularly by means of dry laminating.

7. Acoustic damping element according to any of the preceding claims,
**characterized**
**in that** the thin membrane (2) of nonwoven web is additionally provided with small holes, the holes having a diameter which is smaller than twice the layer thickness (d) of the membrane, more particularly less than once the layer thickness (d) of the membrane.

8. Acoustic damping element according to any of the preceding claims,
**characterized**
**in that** the thin membrane (2) of nonwoven web is between 10 µm and 500 µm, preferably between 10 µm and 100 µm thick.

9. Acoustic damping element according to any of the preceding claims,
**characterized**
**in that** the foam (3) is an open-pore flexible polyether urethane foam having layer thicknesses (D) of 1 mm to 50 mm, preferably 1 mm to 10 mm.

10. Acoustic damping element according to any of the preceding claims,
**characterized**
**in that** the foam (3) is impregnated, more particularly impregnated with a polyacrylate.

11. Acoustically insulating component,
**characterized**
**in that** the acoustic damping element according to any of the preceding claims is fastened only at a few points on the acoustically insulating component.

## Revendications

1. Elément d'amortissement de bruit (1) comportant une couche en mousse (3),
une membrane (2) mince en non-tissé étant appliquée au moins sur une face de la mousse (3),
la mousse (3) présentant un poids spécifique de 60 kg/m³ à 150 kg/m³, **caractérisé en ce que** la membrane (2) mince en non-tissé est appliquée au moyen d'une colle en forme de bandes ou de points sur la mousse (3).

2. Elément d'amortissement de bruit (1) selon la revendication 1
**caractérisé en ce que**
l'épaisseur de couche (d) de la membrane est inférieure à 5 % de l'épaisseur de couche (D) de la mousse, en particulier inférieure à 1 %.

3. Elément d'amortissement de bruit (1) selon la revendication 1 ou 2,
**caractérisé en ce que**
la mousse (3) est une mousse molle en polyuréthane en particulier une mousse molle en polyétheruréthane.

4. Elément d'amortissement de bruit (1) selon l'une des revendications précédentes,
**caractérisé en ce que**
le non-tissé est un non-tissé en polyester, en particulier un non-tissé en fibres de polyester.

5. Elément d'amortissement de bruit (1) selon l'une des revendications précédentes,
**caractérisé en ce que**
le non-tissé a un poids surfacique de moins de 100 g/m², en particulier de moins de 50 g/m².

6. Elément d'amortissement de bruit (1) selon l'une des revendications précédentes,
**caractérisé en ce que**
la membrane mince (2) en non-tissé est appliquée sur la mousse (3) par laminage, en particulier par laminage à sec.

7. Elément d'amortissement de bruit (1) selon l'une des revendications précédentes,
**caractérisé en ce que**
la membrane mince (2) en non-tissé est additionnellement pourvue de petits trous, les trous présentant un diamètre qui est inférieur à la double épaisseur de couche (d) de la membrane, en particulier inférieur à la simple épaisseur de couche (d) de la membrane.

8. Elément d'amortissement de bruit (1) selon l'une des revendications précédentes,
**caractérisé en ce que**
la membrane mince (2) en non-tissé a une épaisseur entre 10 µm et 500 µm, de préférence entre 10 µm et 100 µm.

9. Elément d'amortissement de bruit (1) selon l'une des revendications précédentes,
**caractérisé en ce que**
la mousse (3) est une mousse molle de polyétheruréthane à pores ouverts avec des épaisseurs de couche (D) de 1 mm à 50 mm, de préférence de 1 mm à 10 mm.

10. Elément d'amortissement de bruit (1) selon l'une des revendications précédentes,
**caractérisé en ce que**
la mousse (3) est imprégnée, en particulier avec un polyacrylate.

11. Elément de construction amortissant le bruit,
**caractérisé en ce que**
l'élément d'amortissement de bruit selon l'une des revendications précédentes n'est fixé que sur un petit nombre de points de l'élément de construction amortissant le bruit.
